# EUROPÄISCHE PATENTSCHRIFT

(11) **EP 1 929 369 B1**
(45) Veröffentlichungstag und Bekanntmachung des Hinweises auf die Patenterteilung: **20.03.2013**
(21) Anmeldenummer: 06777021.4
(22) Anmeldetag: 23.08.2006
(51) Int. Cl.: G03B 42/02, G03B 42/08

(54) **Gerät zum Auslesen belichteter Speicherfolien in Kassetten**
Device for reading exposed imaging plates in cassettes
Appareil pour lire des feuilles d'imagerie exposées dans des cassettes

(30) Priorität: 27.09.2005 DE 102005046315
(43) Veröffentlichungstag der Anmeldung: 11.06.2008
(73) Patentinhaber: Dürr Dental AG, 74321 Bietigheim-Bissingen (DE)
(72) Erfinder: THOMS, Michael, 74321 Bietigheim-Bissingen (DE); HÄNTSCH, Herbert, 71717 Beilstein (DE); MUSTAJBEGOVIC, Enes, 74321 Bietigheim-Bissingen (DE); NOWACEK, Wilhelm, 74389 Cleebronn (DE); PHILIPPS, Bernd, 74199 Untergruppenbach (DE); SCHILLING, Petra, 74321 Bietigheim-Bissingen (DE); WEBER, Michael, 71576 Burgstetten (DE)
(74) Vertreter: Ostertag, Reinhard
(86) Internationale Anmeldenummer: PCT/EP2006/008261
(87) Internationale Veröffentlichungsnummer: WO 2007/036269

(56) Entgegenhaltungen:
- DE-A1- 3 731 204
- DE-C2- 19 942 211
- JP-A- 2005 202 293
- US-A- 4 810 874
- US-A- 5 340 995
- US-A1- 2004 164 252

## Beschreibung

Die Erfindung betrifft ein Gerät zum Auslesen belichteter Speicherfolien gemäß dem Oberbegriff des Anspruches 1.

Speicherfolien, die ein latentes Bild in Form angeregter lokaler Zustände von Farbzentren speichern, eignen sich anders als Röntgenfilme für eine häufige Wiederverwendung. Für die Auflösung der Speicherfolien ist wichtig, daß die aktive Arbeitsschicht, welche die Speicherzentren (in der Regel seltene Erden in einer Erdalkali- oder Aklali-Mischkristallmatrix) homogen verteilt enthalten und optisch gut isotrop sind, ihre optische Isotropie auch im längeren Gebrauch bewahren. Kratzer und Schleifspuren führen zu einer Beeinträchtigung des Röntgenbildes.

Um speicherfolien auch im Dauergebrauch von derartigen mechanischen Beschädigungen zu schützen, beschreibt die US 2004/0164252 A1 ein Gerät zum Auslesen belichteter Speicherfolien, die in einer Kassette mit Rückenteil und Deckel angeordnet sind. Zum Auslesen der Speicherfolien werden diese zusammen mit dem Rückenteil der Kassette magnetisch haftend an einer Förderplatte angeordnet. Die Förderplatte wird dann zusammen mit der Speicherfolie an einem Auslesestrahl vorbeibewegt. Nach dem Auslesen wird die Förderplatte wieder in ihre Ausgangsposition zurückbewegt und das Rückenteil der Kassette zusammen mit der ausgelesenen Speicherfolie aus dem Gerät ausgegeben. Nachteilig ist hierbei, daß die Förderplatte für eine weitere auszulesende Speicherfolie erst wieder zur Verfügung steht, wenn die bereits ausgelesene Speicherfolie ausgegeben wurde.

Ein weiteres Gerät zum Auslesen von speicherfolien ist in der WO 01/18796 A1 beschrieben.

Aus der DE 199 42 211 C2 ist ein Gerät zum Auslesen von biegsamen Speicherfolien bekannt, wobei die aus ihrer Kassette entnommenen Folien durch auf ihrer Rückseite angreifende Antriebsbänder in der Auslesevorrichtung angetrieben werden.

Die US 4 810 874 offenbart ebenfalls eine Vorrichtung zum Auslesen belichteter Speicherfolien, wobei die Folie mit ihrer Kassette mittels Antriebsrollen durch die Auslesestation befördert wird.

Durch die vorliegend Erfindung soll der Antrieb der Kassette zum Auslesen der Speicherfolien Vereinfacht werden.

Diese Aufgabe ist erfindungsgemäß gelöst durch ein Auslesegerät mit den im Anspruch 1 angegebenen Merkmalen.

Zusammen mit einem solchen Auslesegerät werden Kassetten für die speicherfolien verwendet, die aus einem im Wesentlichen starren Material hergestellt sind, das für die Führung der Speicherfolie und für die Übertragung der Antriebskräfte verantwortlich ist. Die Speicherfolie braucht weder Führungsfunktionen noch Antriebsfunktionen selbst zu unterstützen.

Durch Führung und Antrieb erzeugte Verschleißspuren auf den Kassetten sind dagegen tolerierbar und beeinträchtigen das Arbeiten der Speicherfolie nicht.

In der Regel sind die Speicherfolien dann, wenn es sich bei dem Auslesegerät um einen Trommelscanner handelt, in der Speicherfolie zu teilzylindrischer Gestalt gehalten angeordnet. Dies wird durch entsprechende Konturierung zweier Hälften der Kassette gewährleistet, die zum Einlegen einer Speicherfolie voneinander wegbewegt werden und dann wieder zusammen bewegt werden.

Die schalenförmige Kassette ist nach einer Seite hin offen, derart, daß die lichtempfindliche Arbeitsschicht einer Speicherfolie frei ausgelesen werden kann. Diese Seite der Kassette wird zum Aufnehmen des Röntgenlichtes und zum Transportieren der belichteten Kassette zum Auslesegerät durch einen Lichtschutzdeckel verschlossen.

Dieser wird dann am Auslesegerät abgenommen, bevor der eigentliche Auslesevorgang erfolgt.

Vorteilhafte Weiterbildungen der Erfindung sind in Unteransprüchen angegeben.

Nachstehend wir die Erfindung anhand von Ausführungsbeispielen unter Bezugnahme auf die Zeichnung näher erläutert. In dieser zeigen:
- Figur 1: einen vertikalen axialen Schnitt durch ein Gerät zum Auslesen belichteter Speicherfolien, welches zugleich mit einer integrierten Löscheinheit versehen ist;
- Figur 2: einen ähnlichen Schnitt wie Figur 1, der jedoch in einer um 45° zur Zeichenebene von Figur 1 versetzten Schnittebene liegt;
- Figur 3: eine Aufsicht auf eine den Kassetterieinlaß des Gerätes benachbarte Vereinzelungsstation, vor der sich eine Warteschlange von belichteten Kassetten aufbauen kann, von welcher dann jeweils eine Kassette an die eigentliche Ausleseeinheit weitergegeben wird;
- Figur 4: eine Aufsicht auf die Unterseite der in Figur 3 gezeigten Vereinzelungsstation;
- Figur 5: eine Aufsicht auf die Mechanik der in den Figuren 3 und 4 gezeigten Vereinzelungsstation;
- Figur 6: eine auseinandergezogene Aufsicht auf die Mechanik der Vereinzelungsstation gesehen in Figur 5 von rechts oben;
- Figur 7: eine weitere Aufsicht auf die Unterseite der Vereinzelungsstation;
- Figur 8: eine seitliche Ansicht der Vereinzelungsstation;
- Figur 9: eine weitere Aufsicht auf die Oberseite der Vereinzelungsstation;
- Figur 10: eine auseinandergezogene Darstellung einer Antriebseinrichtung, mit welcher die Kassetten über einen Auslesespalt eines Auslesekopfes des Gerätes hinweg bewegt werden;

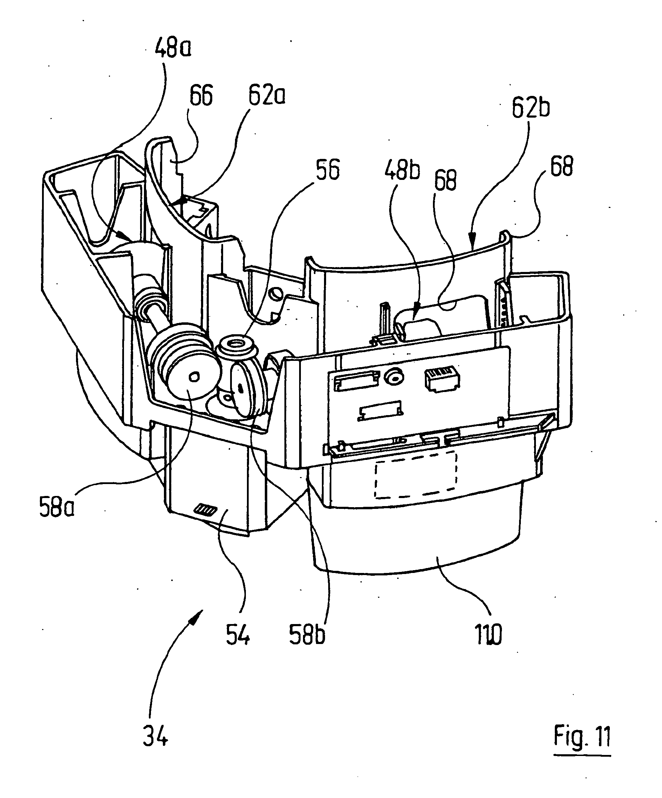

- Figur 11: eine ähnliche Ansicht wie Figur 10, in welcher die Antriebseinrichtung in zusammengebautem Zustand gezeigt ist;
- Figur 12: eine perspektivische Ansicht einer im unteren Abschnitt des Gerätes vorgesehenen Löschstation zum Löschen von Resten des ausgelesenen Bildes;
- Figur 13: eine perspektivische Ansicht einer Kassetten-Ausstoßstation, die beim unteren Ende des Gerätes vorgesehen ist;
- Figur 14: eine Aufsicht auf die Ausstoßstation; und
- Figur 15: eine auseinandergezogene Darstellung einer Speicherfolien-Kassette, die mit einem Auslesegerät nach den Figuren 1 bis 14 verwendet wird.

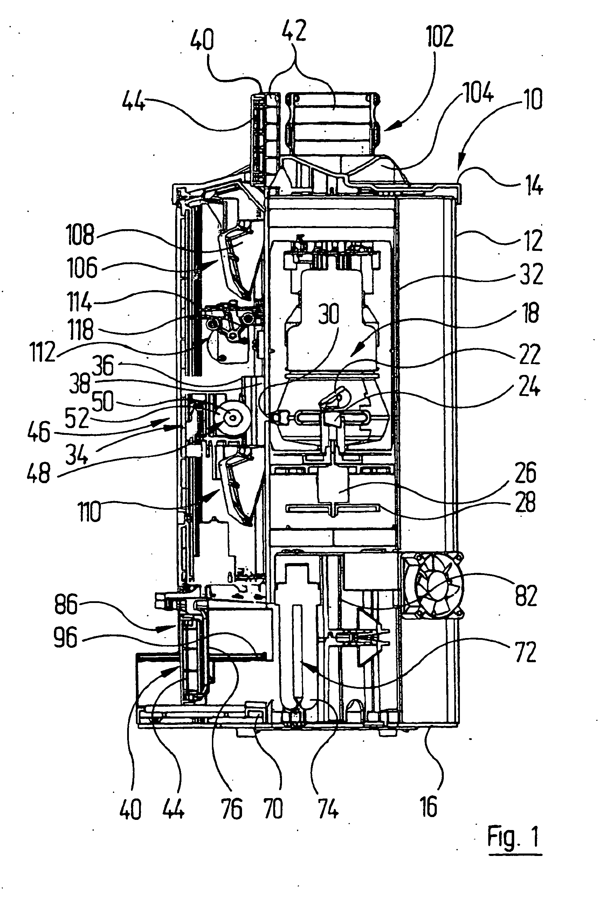

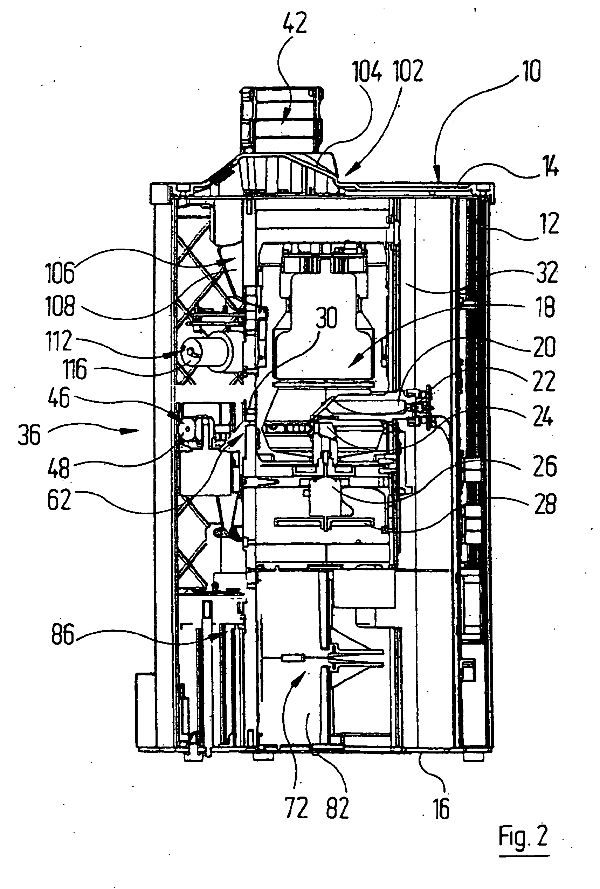

Das in Figur 1 und 2 gezeigte Gerät zum Auslesen belichteter Speicherfolien hat ein insgesamt mit 10 bezeichnetes Gehäuse mit einer zylindrischen Umfangswand 12, einem im wesentlichen kreisförmigen Deckel 14 und einem ebenfalls im wesentlichen kreisförmigen Boden 16.

Auf der Achse des Gehäuses 10 ist ein insgesamt mit 18 bezeichneter Auslesekopf vorgesehen. Dieser umfasst einen in Figur 2 sichtbaren Laser 20, der horizontal ausgerichtet ist und seinen Laserstrahl über einen 45°-Spiegel 22 auf die Drehachse eines umlaufenden Pentaprismas 24 schickt. Letzteres wird durch einen Motor 26 angetrieben, dessen Drehzahl durch ein Schwungrad 28 stabilisiert ist.

Man erhält auf diese Weise einen durch Laserlicht gebildeten Auslesestrahl, der in einer transversalen Ebene umläuft und durch zwei in Umfangsrichtung verlaufende um 90° versetzte Ausleseschlitze 30 eines Auslesekopfgehäuses 32 nach außen austritt. Das Auslesekopfgehäuse 32 ist zylindrisch.

Vor den Ausleseschlitzen 30 sind in Umfangsrichtung ebenfalls um 90° versetzt zwei Auslesestationen 34 vorgesehen. Diese umfassen jeweils eine auf die Außenseite des Auslesekopfgehäuses 32 aufgesetzte Führung 36, die mit Führungsschlitzen 38 versehen sind, die mit den Schmalflächen von Kassetten 40 zusammenarbeiten, wie sie auf der Oberseite des Gerätes in einer Ausgangsstellung wiedergegeben sind.

Die Kassetten 40 haben die Form flacher rechteckiger Schalen, die auf der einen Seite offen sind. Auf die offenen Seiten der Kassetten 40 sind Lichtschutzdeckel 42 aufgesetzt. Die Lichtschutzdeckel 42 arbeiten mit der Kassette 40 über eine in Figur 1 vertikale Schiebeführung zusammen, die einseitig (in Figur 1 nach unten) offen ist. Zum Aufnehmen eines Röntgenbildes auf einer im Inneren der Kassette 40 angeordneten nur schematisch angedeuteten Speicherfolie 44 befinden sich die Lichtschutzdeckel 42 auf der Kassette selbst.

Die Kassette 40 hat im Inneren Auflageflächen, durch welche die Speicherfolie 44 in teilzylindrische Geometrie gebogen werden. Der Krümmungsradius dieser Auflageflächen entspricht dem Krümmungsradius eines zur Achse des Auslesekopfes 18 konzentrischen Kreises mit einem solchen Abstand, wie ihn die Mitte Speicherfolie 44 in der Auslesestation 34 aufweist.

Zum Vorbeibewegen der Speicherfolie 44 am Ausleseschlitz 30 ist ein insgesamt mit 46 bezeichneter Reibradantrieb vorgesehen. Dieser umfasst ein um eine horizontale in Umfangsrichtung verlaufende Achse drehbares Reibrad 48, welches eine metallische Felge 50 und einen verhältnismäßig dicken Reifen 52 aus elastomerem Material aufweist. Die gesamte Anordnung ist so getroffen, daß der Reifen 52 unter geringfügiger Kompression auf der Rückseite einer Kassette 40 läuft, wenn diese in der Führung 36 am Ausleseschlitz 30 vorbeibewegt wird.

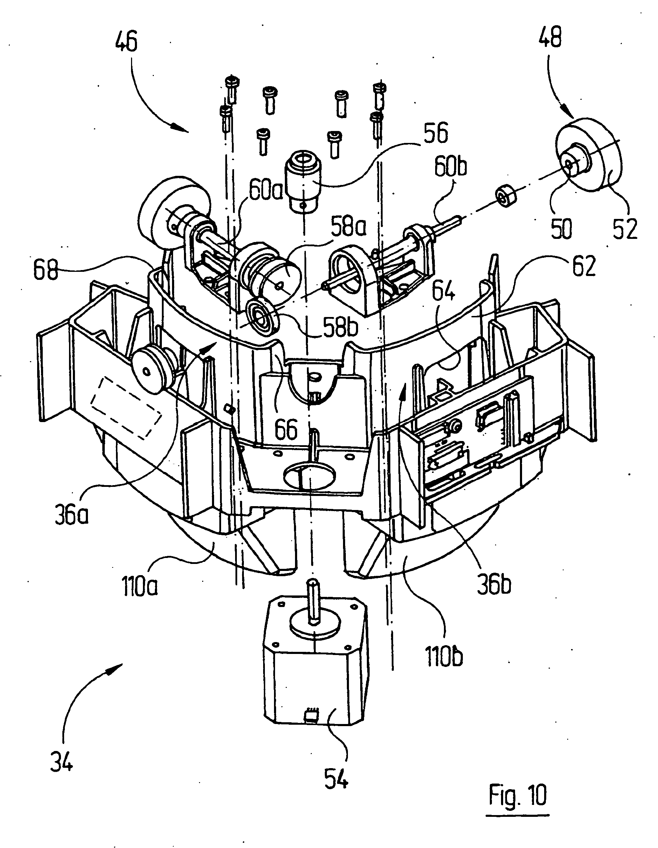

Die beiden in Umfangsrichtung versetzten Auslesestationen 34 werden durch einen gemeinsamen Antriebsmotor 54 angetrieben, der in Figur 10 gezeigt ist. Auf der Welle des Antriebsmotores 54 sitzt ein Wurmrad 56, das mit zwei Zahnrädern 58a, 58b kämmt, die auf Radwellen 60a, 60b der beiden Auslesestationen 34a, 34b vorgesehen sind.

Nachstehend braucht nur eine der beiden Auslesestationen detailliert beschrieben zu werden. Soweit Komponenten voneinander unterschieden werden sollen, erfolgt dies durch Anhängen von "a" bzw. "b".

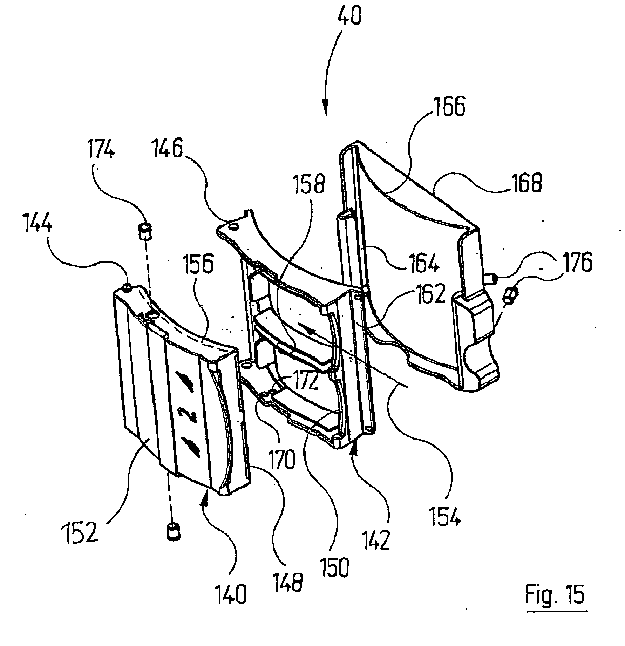

Die Auslesestation 34 hat auf der Führung 36 jeweils eine außenliegende teilzylindrischen Wand 62, in welcher ein Fenster 64 vorgesehen ist, durch welche ein Reibrad 48 hindurchgreifen kann. Die Form der Wand 62 ist der Rückseite einer Kassette 40 (vgl. Figur 15) angepasst.

Die Führung 36 hat ferner zwei zur Wand 62 senkrechte, radiale Führungswände 66, 68, die mit gegenüberliegenden Seitenflächen einer Kassette 40 zusammenarbeiten können.

Wie aus Figur 1 ersichtlich, sind die Reibräder 48 so angeordnet, daß eine nach unten bewegte Kassette erst dann von dem betrachteten Reibrad freikommt, wenn die in ihr angeordnete Speicherfolie den Ausleseschlitz 30 vollständig passiert hat.

Nach diesem Freikommen fällt die Kassette frei nach unten.

Auf diesem Weg nach unten trifft die Unterseite der Kassette dann auf ein Polster 70 aus elastomerem Material. Sie steht dann mit nach innen weisender Arbeitsschicht der Speicherfolie vor einer insgesamt mit 72 bezeichneten Löscheinheit, die dazu dient, beim Auslesen des latenten Bildes in der Auslesestation 34 noch nicht deaktivierte Speicherzentren durch Bestrahlung mit Löschlicht vollständig zu deaktivieren.

Als Löschlichtquelle wird beim betrachteten Ausführungsbeispiel eine Fluoreszenzlampe 74 verwendet, wie sie als Energiesparlampe im Handel erhältlich ist. Vorzugsweise wird eine solche Fluoreszenzlampe verwendet, die ein warmes Licht mit höherem Rotanteil abgibt. Alternativ können spezielle Fluoreszenzlampen verwendet werden, deren Glasröhre mit einem im Roten emittierenden Leuchtstoff (Rotleuchtstoff) beschichtet ist.

Beim Herunterfallen einer Kassette 40 von der Auslesestation 34 zur Löschstation 72 stand ein Schieber 76, der ein großes Durchtrittsfenster 78 und einen nur schmalen bei seinem Rand liegenden Rahmen 80 aufweist, radial nach innen vom Fallweg der Kassette 40 beabstandet.

Der Schieber 76 ist mit einer in Figur 1 nicht näher gezeigten Antriebsmechanik versehen, und er kann so eine nach dem Löschen vor ihm stehende Kassette 40 in Figur 1 nach links zu einer Abgabeöffnung des Gerätes bewegen.

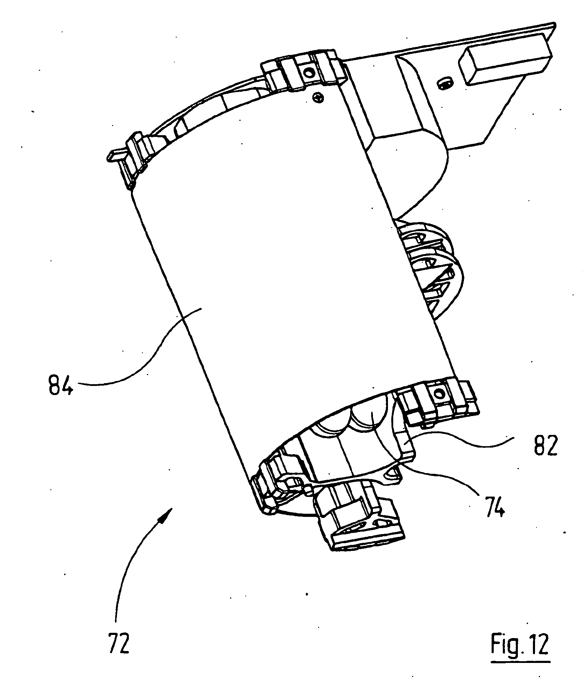

Wie aus Figur 12 ersichtlich, umfasst die Löschstation 72 ein Gehäuse 82, in welchem die Fluoreszenzlampe 74 Aufnahme findet. Zu ihr gehört ferner ein halbzylindrisches großes Kantenfilter 84, welches ab einer Wellenlänge von etwa 480 nm durchlässig ist.

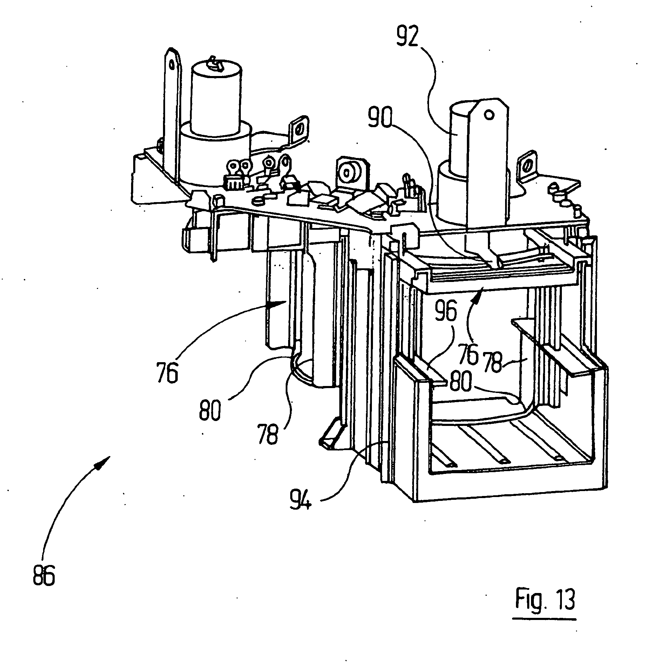

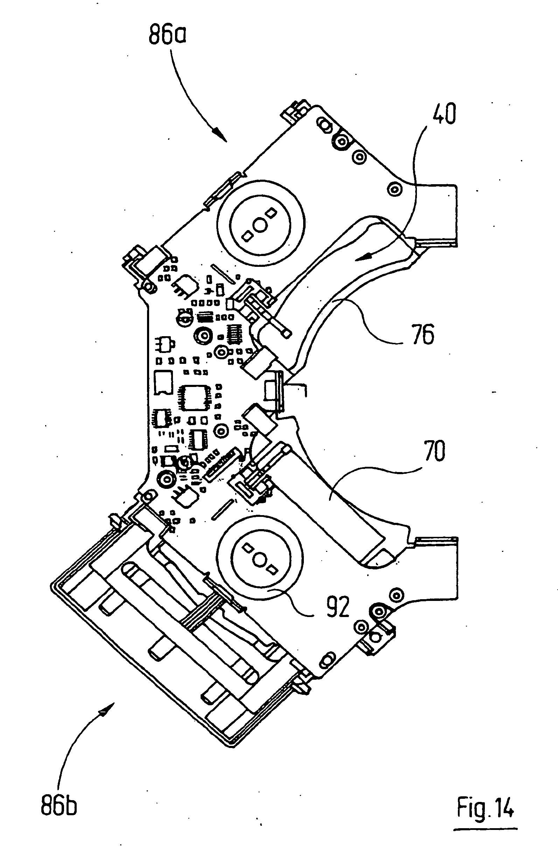

Einzelheiten einer insgesamt mit 86 bezeichneten Ausstoßeinheit, zu welcher der Schieber 76 gehört, sind den Figuren 13 und 14 zu entnehmen.

Diese Einheit ist wieder doppelt aufgebaut, ähnlich wie die Antriebseinheit der Auslesestation 34. In Figur 13 ist die hintere Ausstoßeinheit nur teilweise wiedergegeben.

Man erkennt, daß der Schieber 76 auf einer Führung läuft und durch einen drehbaren Hebel 90 bewegt wird, der auf der Abtriebswelle eines Motors 92 sitzt.

Die Antriebe für die beiden Schieber 76 sind voneinander unabhängig, um in beiden Auslesekanälen des Gerätes mit unabhängigen Taktzeiten arbeiten zu können.

Um die Kassette 40 im Inneren eines Schachtes 94, der zum Geräteauslaß führt, zu stabilisieren, sind die wände dieses Schachtes mit horizontalen Bürstenreihen 96 versehen, die mit den Kassetten-Seitenwänden zusammenarbeiten.

Die beiden Ausstoßeinheiten 76 sind ebenso wie die beiden Auslesestationen 34 und die beiden Vereinzelungsstationen durch eine Verbindungswand zu einer einstückigen handhabbaren Einheit verbunden.

Wie aus Figur 14 ersichtlich, ist der Schieber 76 in seiner Außenfläche konvex teilzylndrisch und paßt zur konkav teilzyindrischen inneren Fensterrandfläche einer Kassette die kurz vor der lichtempfindlichen Arbeitsschicht einer in der Kassette befindlichen Speicherfolie liegt.

Siehe hierzu die in Figur 14 obere Ausstoßstation, bei welcher der Schieber 76 voll radial nach innen gefahren gezeigt ist und eine Kassette 40 vor diesem steht, während bei der in Fig. 14 unteren Ausstoßstation der Schieber 76 radial nach außen bewegt ist, so daß das Polster 70 sichtbar ist.

Am Ausgang des Schachtes 94 kann eine in der Zeichnung nicht wiedergegebene Station vorgesehen sein, in welcher auf die gelöschte Kassette wieder ein Lichtschutzdeckel 42 aufgeschoben wird. Dieses Aufschieben kann aber auch nach dem Ausstoßen einer Kassette einfach manuell unter Tageslichtbedingungen erfolgen, da Tageslicht noch nicht angeregte Farbzentren nicht beeinflusst.

Auf dem Deckel 14 des Gehäuses 10 sind zwei Einsetzstationen 102 vorgesehen. Diese haben jeweils eine Einsitzhilfe 104, die eine Kassette mit aufgeschobenem Lichtschutzdeckel am unteren Ende sicher positionieren und erfassen kann.

Die Einsetzhilfen 104 sind so gestaltet, daß die Kassette 40 über einen oberen Einführschlitz des Gerätes zu stehen kommt, während der Lichtschutzdeckel fest abgestützt ist. Letzterer trägt somit über die lichtdichte Führung die Kassette 40. Wird auf letztere nun ein vertikaler Druck ausgeübt, so wird sie vom Lichtschutzdeckel nach unten herabgeschoben und gelangt ins Innere des Gehäuses 10, wo sie unter Schwerkrafteinfluß nach unten fällt.

Der Fallweg ist durch einen keilförmigen vertikalen Querschnitt aufweisende Leit- und Abdeckkappe 106 abgedeckt, die in Umfangsrichtung durch Endwände 108 verschlossen ist.

Eine ähnliche Leit- und Abdeckplatte ist bei 110 unterhalb der Auslesestation 34 gezeigt.

Wie aus Figur 15 ersichtlich, umfaßt die Kassette 40 zwei Kassettenteile 140, 142, die über Gelenkzapfen 144 des Kassettenteiles 140 und Lagerbohrungen 146 des Kassettenteiles 142 verschwenkbar verbunden sind.

Zwei flache rechteckige Ausnehmungen 148 des Kassettenteiles 140 und zwei flache bogenförmige Ausnehmungen 150 des Kassettenteiles 142 geben jeweils zusammen eine Folien-Einführöffnung 154 vor.

Das Kassettenteil 140 hat einen teilzylindrischen Boden 152, der im Auslesegerät zur Achse des Auslesekopfes 18 koaxial ist. Gleiches gilt für eine innere Anlagefläche 156 des Kassettenteiles 140, die um die Tiefe der Ausnehmungen 148 vom radial inneren Rand des Kassettenteiles 140 zurückversetzt ist.

Zum formschlüssigen Andrücken einer flexiblen Speicherfolie 44 an die gekrümmten Anlagefläche 156 dienen mit den Rändern der Speicherfolie zusammenarbeitende bogenförmige Andrückstege 158 des Kassettenteiles 142, die im Auslesegerät ebenfalls koaxial zur Achse des Auslesekopfes 18 verlaufen.

Das Kassettenteil 142 ist als beidseitig offener Rahmen ausgebildet und hat an seinen Seiten Führungsflansche 162, die mit Führungsschlitzen 164 eines Lichtschutzdeckels 42 zusammenarbeiten.

Der Lichtschutzdeckel 42 hat eine zur innenliegenden Seite des Kassettenteiles 142 komplementäre Abdeckwand 166, welche die Innenseite des Kassttenteiles 142 lichtdicht verschließen kann.

Falls gewünscht kann vor der Abdeckwand noch eine ebene Außenwand 168 vorgesehen sein, wenn die Einheit aus Kassette und aufgesetztem Lichtsutzdeckel eine plane Hauptfläche haben soll.

Der Lichtschutzdeckel 42 ist aus einem für Röntgenstrahlen durchlässigen, für sichtbares Licht aber undurchlässigen Material gefertigt.

Rastöffnungen 172, 174 des Kassttenteiles 142 dienen zusammen mit passenden Rastzapfen des Kassettenteiles 140 (in Figur 15 nicht sichtbar) zum Verrasten der beiden Kassettenteile in einer Schließstellung, in welcher die beiden Speicherfolien fest in teilzylindricher Geometrie fixiert sind, und einer leicht geöffneten Stellung, in welcher Speicherfolien eingesetzt und entnommen werden können.

Mit 164 und 176 sind Kugel-Rasteinheiten bezeichnet, welche die beiden Kassettenteile 140, 142, bzw. die Kassette 40. und den Lichtschutzdeckel 42 verrasten können.

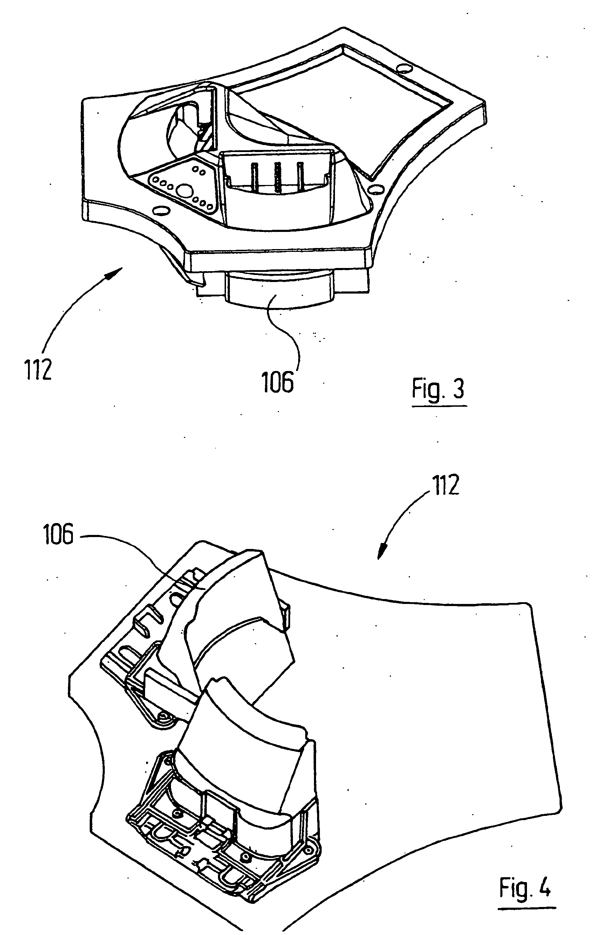

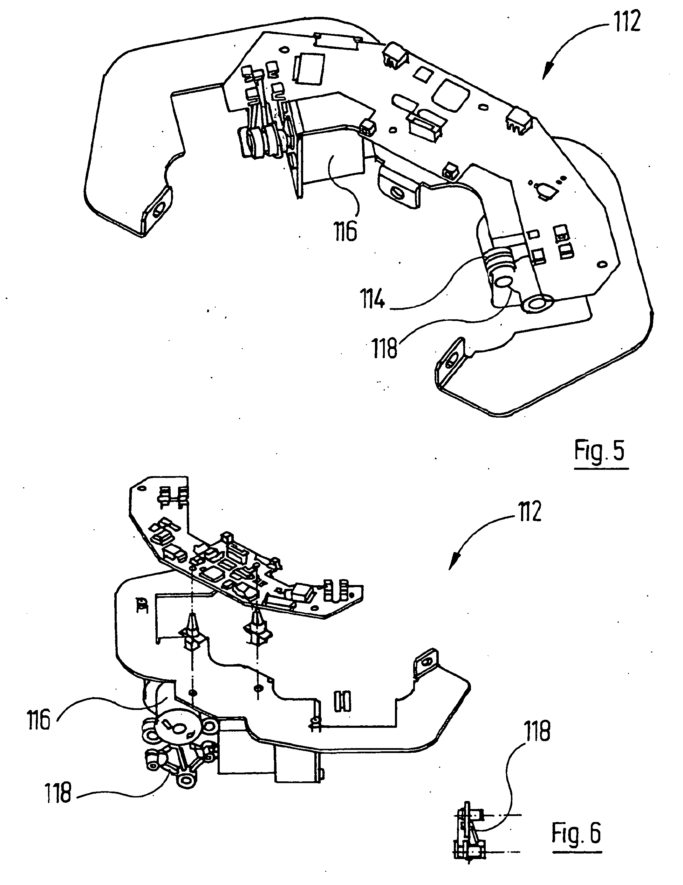

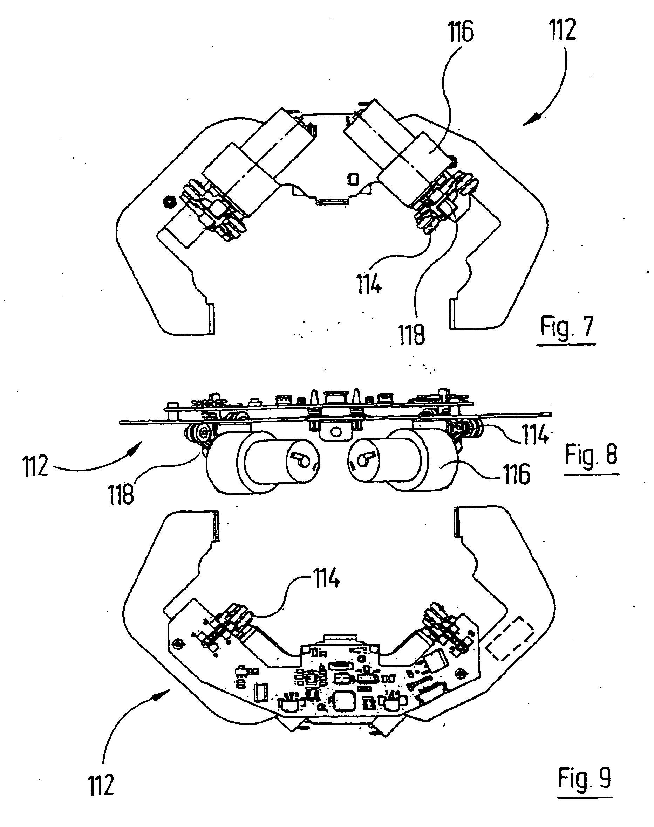

Wie aus Figur 3 bis 9 ersichtlich, ist in Folienförderrichtung gesehen vor der Antriebseinrichtung 46 eine Kassetter-Vereinzelungsstation 112 vorgesehen. Die Vereinzelungsstation 112 weist einen Bremskörper 114 auf, der zwischen einer Kassetten-Freigabestellung und einer Kassetten-Bremsstellung verlagerbar ist. Der Bremskörper 114 ist dazu auf einem durch einen Motor 116 drehbaren Hebel 118 angeordnet.

## Patentansprüche

1. Gerät zum Auslesen belichteter Speicherfolien (42), mit einem Auslesekopf (18), der einen in einer ersten Abtastrichtung bewegten Auslesestrahl erzeugt und Detektionsmittel (31) für von der Speicherfolie (42) beim Auslesen abgegebenen Fluoreszenzlichtes aufweist, und mit einer Antriebseinrichtung (46), welche die Speicherfolie (42) in zur ersten Abtastrichtung geneigter zweiter Abtastrichtung bewegt, wobei die Speicherfolie (42) in einer Kassette (40) angeordnet ist,
**dadurch gekennzeichnet, daß**
a) die Antriebseinrichtung (46) als Abtriebsteil ein Reibrad (48) aufweist, welches an der Kassette (40) kraftschlüssig angreift,
b) das Reibrad (48) an der Rückseite der Kassette (40) angreift, vorzugsweise bei deren Mitte,
c) das Reibrad einen Reifen (52) aus elastomerem Material aufweist,
d) die Dicke des elastomeren Reifens (52) etwa das Einsbis Dreifache, vorzugsweise etwa das Doppelte der Dicke der Kassette beträgt.

2. Gerät nach Anspruch 1, **dadurch gekennzeichnet, daß** die Antriebseinrichtung (46) eine mit der Kassette 40 zusammenarbeitende Führung (36) aufweist.

3. Gerät nach Anspruch 2, **dadurch gekennzeichnet, daß** die Materialpaarung von Führung (36) und Kassette (40) niederen Reibungskoeffizienten aufweist.

4. Gerät nach einem der Ansprüche 1 bis 3, **dadurch gekennzeichnet, daß** die Materialpaarung aus elastischem Material des Reifens (52) und Material der Kassette (40) einen hohen Reibbeiwert hat.

5. Gerät nach einem der Ansprüche 1 bis 4, **dadurch gekennzeichnet, daß** es mehrere in Umfangsrichtung versetzte Antriebseinrichtungen (46) aufweist.

6. Gerät nach Anspruch 5, **dadurch gekennzeichnet, daß** die Mehrzahl von Antriebseinrichtungen (46) durch einen gemeinsamen Antriebsmotor (54) über ein Verteilergetriebe (56 bis 60) angetrieben sind.

7. Gerät nach einem der Ansprüche 1 bis 6, **dadurch gekennzeichnet, daß** die Bahn der Kassetten (40) im Wesentlichen vertikal verläuft.

8. Gerät nach einem der Ansprüche 1 bis 7, **dadurch gekennzeichnet, daß** die Antriebseinrichtung (46) auf der Folienabgabeseite eine Abdeck- und heitklappe (110) aufweist, welche vorzugsweise als Haube mit keilförmigem Querschnitt ausgebildet ist.

9. Gerät nach einem der Ansprüche 1 bis 8, **dadurch gekennzeichnet, daß** eine den Auslesekopf (16) umgebende Wand (32) zylindrisch ist.

10. Gerät nach einem der Ansprüche 1 bis 9, **dadurch gekennzeichnet, daß** in Folienförderrichtung gesehen vor der Antriebseinrichtung (46) eine Kassetten-Vereinzelungsstation (112) vorgesehen ist.

11. Gerät nach Anspruch 10, **dadurch gekennzeichnet, daß** die Vereinzelungsstation (112) mindestens einen Bremskörper (114) aufweist, der zwischen einer Kassetten-Freigabestellung und einer Kassetten-Bremsstellung verlagerbar ist.

12. Gerät nach Anspruch 11, **dadurch gekennzeichnet, daß** der Bremskörper (114) als Rad ausgebildet ist.

13. Gerät nach Anspruch 11 oder 12, **dadurch gekennzeichnet, daß** der Bremskörper (114) auf einem durch einen Motor (116) drehbaren Hebel (118) angeordnet ist.

14. Gerät nach Anspruch 13 mit mehreren Antriebseinrichtungen (46), **dadurch gekennzeichnet, daß** für jede Antriebseinrichtung (46) jeweils eine in Folien-Förderrichtung fluchtende Vereinzelungsstation (112) vorgesehen ist.

15. Gerät nach Anspruch 14, **dadurch gekennzeichnet, daß** die Vereinzelungsstationen (112) unabhängige Antriebe (116) für ihre Bremskörper (114) aufweisen.

16. Gerät nach einem der Ansprüche 11 bis 15, **dadurch gekennzeichnet, daß** in Folienförderrichtung gesehen vor der vereinzelungsstation (112) ein Abdeck- und Leitkörper (106) vorgesehen ist.

17. Gerät nach Anspruch 16, **dadurch gekennzeichnet, daß** der Abdeck- und Leitkörper (106) die Form einer Haube mit keilförmigem Querschnitt aufweist.

18. Gerät nach einem der Ansprüche 1 bis 17 zur Verwendung mit Kassetten (40), die mit einem ihr offenes Ende verschließenden Deckel (42) zusammenarbeiten, **gekennzeichnet durch** eine in Folienförderrichtung vor der Antriebseinrichtung (46) angeordnete Einrichtung (102) zum Trennen von Deckel (42) und Kassette (40).

19. Gerät nach Anspruch 18, **dadurch gekennzeichnet, daß** der Deckel (42) über eine Schiebeführung (162,164) lichtdicht mit der Kassette (40) zusammenarbeitet.

20. Gerät nach Anspruch 18 oder 19, **dadurch gekennzeichnet, daß** die Führungsrichtung der Deckelabnehmeinrichtung (102) und die Führungsrichtung der Antriebseinrichtung (46) zusammenfallen.

21. Gerät nach einem der Ansprüche 1 bis 20, **dadurch gekennzeichnet, daß** in Folienförderrichtung gesehen hinter der Antriebseinrichtung (46) eine Folien-Löschstation (72) vorgesehen ist.

22. Gerät nach Anspruch 21, **dadurch gekennzeichnet, daß** die Folienlöschstation (72) als Lichtquelle eine Fluoreszenzlampe, insbesondere eine warmtonlampe oder eine Rot-Leuchtstoff-Lampe, eine Breitbandlichtquelle, insbesondere eine Halogenlampe oder eine Xenonlampe oder eine Schmalband-Lichtquelle, insbesondere eine Leuchtdiodenanordnung aufweist.

23. Gerät nach einem der Ansprüche 1 bis 22, **dadurch gekennzeichnet, daß** in Folienförderrichtung gesehen hinter der Antriebseinrichtung (46) eine Station (86) zum Ausstoßen ausgelesener Kassetten (40) vorgesehen ist.

24. Gerät nach Anspruch 23, **dadurch, gekennzeichnet, daß** die Ausstoßstation (86) einen Schieber (76) aufweist, der zwischen einer Wartestellung, in welcher er vom Kassetten-Förderweg entfernt ist in eine Ausstoß-Stellung bewegbar ist, in welcher eine von ihm bewegte Kassette (40) von der Außenseite des Gerätes her zugänglich ist.

25. Gerät nach einem der Ansprüche 1 bis 24, **gekennzeichnet durch** eine am Kassettenauslaß des Gerätes vorgesehene Deckelaufsetzstation.

## Claims

1. Device for reading out exposed imaging plates (42), with a readout head (18) which generates a readout beam which is moved in a first scanning direction and exhibits detection means (31) for fluorescent light emitted from the imaging plate (42) in the course of readout, and with a feed device (46) which moves the imaging plate (42) in a second scanning direction inclined in relation to the first scanning direction, wherein the imaging plate (42) is arranged in a cassette (40),
**characterized in that**
a) the drive device (46) exhibits a friction wheel (48) as a drive part which engages the cassette (40) in non-positive manner,
b) the friction wheel (48) engages the rear of the cassette (40), preferably in the middle thereof
c) the friction wheel exhibits a tyre (52) made of elastomeric material,
d) the thickness of the elastomeric tyre (52) amounts to roughly one to three times, preferably about twice, the thickness of the cassette.

2. Device according to Claim 1, **characterised in that** the drive device (46) exhibits a guide (36) interacting with the cassette (40).

3. Device according to Claim 2, **characterised in that** the material pairing of the guide (36) and the cassette (40) exhibits low coefficient of friction.

4. Device according to one of Claims 1 to 3, **characterised in that** the material pairing consisting of elastic material of the tyre (52) and material of the cassette (40) has a high coefficient of friction.

5. Device according to one of Claims 1 to 4, **characterised in that** it exhibits several drive devices (46) which are offset in the peripheral direction.

6. Device according to Claim 5, **characterised in that** the several drive devices (46) are driven by a common drive motor (54) via a distributor transmission (56 to 60).

7. Device according to one of Claims 1 to 6, **characterised in that** the trajectory of the cassettes (40) extends substantially vertically.

8. Device according to one of Claims 1 to 7, **characterised in that** the drive device (46) exhibits on the plate-output side a covering-and-conducting flap (110) which preferably takes the form of a hood with wedge-shaped cross-section.

9. Device according to one of Claims 1 to 8, **characterised in that** a wall (32) surrounding to the readout head (18) is cylindrical.

10. Device according to one of Claims 1 to 9, **characterised in that** a cassette-segregation station (112) is provided upstream of the drive device (46), viewed in the plate-conveying direction.

11. Device according to Claim 10, **characterised in that** the segregation station (112) exhibits at least one braking body (114) which is capable of being shifted between a cassette-release position and a cassette-braking position.

12. Device according to Claim 11, **characterised in that** the braking body (114) takes the form of a wheel.

13. Device according to Claim 11 or 12, **characterised in that** the braking body (114) is arranged on a lever (118) which is capable of being rotated by a motor (116).

14. Device according to Claim 13 with several drive devices (46), **characterised in that** for each drive device (46) a segregation station (112) is provided, in each instance in alignment in the plate-conveying direction.

15. Device according to Claim 14, **characterised in that** the segregation stations (112) exhibit independent drives (116) for their braking bodies (114).

16. Device according to one of Claims 11 to 15, **characterised in that** a covering-and-conducting body (106) is provided upstream of the segregation station (112), viewed in the plate-conveying direction.

17. Device according to Claim 16, **characterised in that** the covering-and-conducting body (106) exhibits the shape of a hood with wedge-shaped cross-section.

18. Device according to one of Claims 1 to 17 for use with cassettes (40) which interact with a cover (42) sealing their open end, **characterised by** a device (102) arranged upstream of the drive device (46) in the plate-conveying direction for separating the cover (42) and the cassette (40).

19. Device according to Claim 18, **characterised in that** the cover (42) interacts with the cassette (40) in light-tight manner via a slide guide (162, 164).

20. Device according to Claim 18 or 19, **characterised in that** the guidance direction of the cover-removing device (102) and the guidance direction of the drive device (46) coincide.

21. Device according to one of Claims 1 to 20, **characterised in that** a plate-erasing station (72) is provided downstream of the drive device (46), viewed in the plate-conveying direction.

22. Device according to Claim 21, **characterised in that** the plate-erasing station (72) exhibits by way of light-source a fluorescent lamp, in particular a warm-tone lamp or a red-phosphor lamp, a broadband light-source, in particular a halogen lamp or a xenon lamp, or a narrowband light-source, in particular an array of light-emitting diodes.

23. Device according to one of Claims 1 to 22, **characterised in that** a station (86) for ejecting cassettes (40) that have been read out is provided downstream of the drive device (46), viewed in the plate-conveying direction.

24. Device according to Claim 23, **characterised in that** the ejection station (86) exhibits a slide (76) which is capable of being moved between a waiting position, in which it is remote from the cassette-conveying path, into an ejection position, in which a cassette (40) moved thereby is accessible from the outside of the device.

25. Device according to one of Claims 1 to 24, **characterised by** a cover-mounting station provided at the cassette outlet of the device.

## Revendications

1. Appareil pour lire des écrans à mémoire exposés (42), avec une tête de lecture (18) qui produit un rayon de lecture dans une première direction de balayage et qui présente des moyens de détection (31) pour la lumière fluorescente délivrée par l'écran à mémoire (42) lors de la lecture, et avec un dispositif d'entraînement (46) qui déplace l'écran à mémoire (42) dans une deuxième direction de balayage inclinée par rapport à la première direction de balayage, sachant que l'écran à mémoire (42) est disposé dans une cassette (40),
**caractérisé en ce que**
a) le dispositif d'entraînement (46) présente comme élément mené une roue de friction (48) qui engage la cassette (40) par contact de friction,
b) la roue de friction (48) agit sur le côté arrière de la cassette (40), de préférence en son milieu,
c) la roue de friction présente un bandage (52) en matériau élastomère,
d) l'épaisseur du bandage élastomère (52) est égale à environ une à trois fois, de préférence environ deux fois l'épaisseur de la cassette.

2. Appareil selon la revendication 1, **caractérisé en ce que** le dispositif d'entraînement (46) présente un guide (36) coopérant avec la cassette (40).

3. Appareil selon la revendication 2, **caractérisé en ce que** l'appariement de matériaux du guide (36) et de la cassette (40) présente un faible coefficient de friction.

4. Appareil selon l'une des revendications 1 à 3, **caractérisé en ce que** l'appariement de matériaux constitué du matériau élastique du bandage (52) et du matériau de la cassette (40) présente un coefficient de friction élevé.

5. Appareil selon l'une des revendications 1 à 4, **caractérisé en ce qu'**il présente plusieurs dispositifs d'entraînement (46) décalés en direction périphérique.

6. Appareil selon la revendication 5, **caractérisé en ce que** la pluralité de dispositifs d'entraînement (46) est entraînée par un moteur d'entraînement commun (54) par l'intermédiaire d'une boîte de transfert (56 à 60).

7. Appareil selon l'une des revendications 1 à 6, **caractérisé en ce que** la trajectoire des cassettes (40) s'étend sensiblement verticalement.

8. Appareil selon l'une des revendications 1 à 7, **caractérisé en ce que** le dispositif d'entraînement (46) présente, sur le côté de sortie des écrans, un volet de recouvrement et de guidage (110) qui est de préférence réalisé sous forme de capot de section cunéiforme.

9. Appareil selon l'une des revendications 1 à 8, **caractérisé en ce qu'**une paroi (32) entourant la tête de lecture (18) est cylindrique.

10. Appareil selon l'une des revendications 1 à 9, **caractérisé en ce qu'**un poste (112) de séparation des cassettes une par une est prévu avant le dispositif d'entraînement (46), considéré dans la direction de transport des écrans.

11. Appareil selon la revendication 10, **caractérisé en ce que** le poste de séparation (112) présente au moins un corps de freinage (114), qui peut être déplacé entre une position de libération de cassette et une position de freinage de cassette.

12. Appareil selon la revendication 11, **caractérisé en ce que** le corps de freinage (114) est réalisé sous forme de roue.

13. Appareil selon la revendication 11 ou 12, **caractérisé en ce que** le corps de freinage (114) est disposé sur un levier (118) pouvant être déplacé en rotation par un moteur (116).

14. Appareil selon la revendication 13 avec plusieurs dispositifs d'entraînement (46), **caractérisé en ce qu'**un poste de séparation respectif (112), aligné dans la direction de transport des écrans, est prévu pour chaque dispositif d'entraînement (46).

15. Appareil selon la revendication 14, **caractérisé en ce que** les postes de séparation (112) présentent des entraînements indépendants (116) pour leurs corps de freinage (114).

16. Appareil selon l'une des revendications 11 à 15, **caractérisé en ce qu'**un corps de recouvrement et de guidage (106) est prévu avant le poste de séparation (112), considéré dans la direction de transport des écrans.

17. Appareil selon la revendication 16, **caractérisé en ce que** le corps de recouvrement et de guidage (106) présente la forme d'un capot de section cunéiforme.

18. Appareil selon l'une des revendications 1 à 17 à utiliser avec des cassettes (40) qui coopèrent avec un couvercle (42) fermant leur extrémité ouverte, **caractérisé par** un dispositif (102) pour séparer le couvercle (42) et la cassette (40), dispositif qui est disposé avant le dispositif d'entraînement (46) dans la direction de transport des écrans.

19. Appareil selon la revendication 18, **caractérisé en ce que** le couvercle (42) coopère avec la cassette (40) en étanchéité à la lumière par l'intermédiaire d'un guide coulissant (162, 164).

20. Appareil selon la revendication 18 ou 19, **caractérisé en ce que** la direction de guidage du dispositif (102) d'enlèvement de couvercle et la direction de guidage du dispositif d'entraînement (46) coïncident.

21. Appareil selon l'une des revendications 1 à 20, **caractérisé en ce qu'**un poste (72) d'effacement d'écran est prévu après le dispositif d'entraînement (46), considéré dans la direction de transport des écrans.

22. Appareil selon la revendication 21, **caractérisé en ce que** le poste (72) d'effacement d'écran présente comme source lumineuse une lampe fluorescente, notamment une lampe à ton chaud ou une lampe fluorescente rouge, une source lumineuse à large bande, notamment une lampe halogène ou une lampe au xénon, ou une source lumineuse à bande étroite, notamment un ensemble de diodes électroluminescentes.

23. Appareil selon l'une des revendications 1 à 22, **caractérisé en ce qu'**un poste (86) pour éjecter les cassettes lues (40) est prévu après le dispositif d'entraînement (46), considéré dans la direction de transport des écrans.

24. Appareil selon la revendication 23, **caractérisé en ce que** le poste d'éjection (86) présente un poussoir (76) qui peut être déplacé entre une position d'attente, dans laquelle il est éloigné du parcours de transport des cassettes, et une position d'éjection, dans laquelle une cassette (40) déplacée par lui est accessible depuis le côté extérieur de l'appareil.

25. Appareil selon l'une des revendications 1 à 24, **caractérisé par** un poste de montage de couvercle prévu à la sortie de cassettes de l'appareil.
